# EUROPEAN PATENT SPECIFICATION

(11) **EP 3 407 301 B1**
(45) Date of publication and mention of the grant of the patent: **29.10.2025**
(21) Application number: 16885926.2
(22) Date of filing: 06.05.2016
(51) Int. Cl.: G06T 15/04, G06T 15/10, G06T 7/00, H04N 7/18, G06T 17/20, H04N 13/275, H04N 13/246

(54) **THREE-DIMENSIONAL SURVEILLANCE SYSTEM, AND RAPID DEPLOYMENT METHOD FOR SAME**
DREIDIMENSIONALES ÜBERWACHUNGSSYSTEM UND SCHNELLES EINSATZVERFAHREN DAFÜR
SYSTÈME DE SURVEILLANCE TRIDIMENSIONNELLE, ET SON PROCÉDÉ DE DÉPLOIEMENT RAPIDE

(30) Priority: 21.01.2016 CN 201610040812
(43) Date of publication of application: 28.11.2018
(73) Proprietor: Hangzhou Hikvision Digital Technology Co., Ltd., Hangzhou, Zhejiang 310051 (CN)
(72) Inventor: WANG, Quanzhan, Hangzhou Zhejiang 310051 (CN); LI, Liang, Hangzhou Zhejiang 310051 (CN); LIN, Yaodong, Hangzhou Zhejiang 310051 (CN)
(74) Representative: IPAZ
(86) International application number: PCT/CN2016/081260
(87) International publication number: WO 2017/124663

(56) References cited:
- WO-A1-2004/042662
- WO-A2-01/67749
- CN-A- 101 931 790
- CN-A- 101 951 502
- CN-A- 102 368 810
- CN-A- 104 539 875
- US-A1- 2009 009 513
- US-A1- 2012 314 030

## Description

### TECHNICAL FIELD

The present application relates to video monitoring technologies, and particularly to a 3D monitoring system and a rapid deployment method for the same.

### BACKGROUND

A 3D monitoring system overcomes limitations of a traditional video monitoring system that pictures from different lenses are displayed for one scene. It integrates isolated cameras into a 3D real scene, and achieves 3D real-time monitoring of the whole scene. The 3D monitoring system not only can perform a real-time 3D fusion on real-time videos captured by cameras, but also can backtrack the stored 3D historical videos captured by the cameras. It can intuitively and panoramically present the occurrence of historical events, greatly improving the efficiency of event querying.

The existing 3D monitoring system generally establishes a 3D virtual scene for a monitored site, adds virtual camera devices in the virtual scene based on the actual positions of camera devices in the monitored site, determines the projection relation of a video to the virtual scene based on video parameter information, and establishes a virtual scene roaming system. During research and development, the inventors found the shortcoming of the prior art, that is, the 3D monitoring system needs to obtain intrinsic and extrinsic parameters of camera devices by for example calibration, and there is a one-to-one correspondence between a camera device and its projection in the virtual scene, making the deployment inconvenient and inflexible.

US Patent Application No.2009/009513A1, VAN DEN HENGEL ANTON JOHN et al. relates to a method for generating a three dimensional (3D) model of an object is depicted in a two dimensional (2D) image. The 2D image includes associated 3D information. The method includes an operator determining a geometric primitive corresponding to shape characteristics of the object and then the generation of the 3D model based on the determined geometric primitive, the 2D image, and the associated 3D information.

US Patent Application No.2012/314030A1, DATTA ANKUR et al. relates to estimating properties of three-dimensional (3D) objects in two-dimensional (2D) video data. Objects within two-dimensional (2D) video data are modeled by three-dimensional (3D) models as a function of object type and motion through manually calibrating a 2D image to the three spatial dimensions of a 3D modeling cube. Calibrated 3D locations of an object in motion in the 2D image field of view of a video data input are computed and used to determine a heading direction of the object as a function of the camera calibration and determined movement between the computed 3D locations. The 2D object image is replaced in the video data input with an object-type 3D polygonal model having a projected bounding box that best matches a bounding box of an image blob, the model oriented in the determined heading direction. The bounding box of the replacing model is then scaled to fit the object image blob bounding box, and rendered with extracted image features.

### SUMMARY

An objective of the present application is to provide a 3D monitoring system and a rapid deployment method for the same, which can greatly reduce the difficulty in system deployment when deploying the 3D monitoring system.

The invention is set out in the appended set of claims.

In order to solve the above technical problem, embodiments of the present application disclose a rapid deployment method for a 3D monitoring system, which includes:
displaying a virtual scene and a monitoring video of a monitored site;
obtaining, through an input device, N points selected in the virtual scene as a first point set, and obtaining, through an input device, N points selected in the monitoring video as a second point set, wherein N is greater than 2, and there is a one-to-one correspondence between points in the first point set and points in the second point set respectively, so that a first mapping between the virtual scene and the monitoring video is formed;
generating a first video mesh according to the first mapping, wherein a texture of the first video mesh is at least a part of the monitoring video; and
superimposing and displaying the first video mesh on the virtual scene.

Embodiments of the present application further disclose a 3D monitoring system, including:
a display module, configured to display a virtual scene and a monitoring video of a monitored site;
an obtaining module, configured to obtain, through an input device, N points selected in the virtual scene as a first point set, and obtain, through an input device, N points selected in the monitoring video as a second point set, wherein N is greater than 2, and there is a one-to-one correspondence between points in the first point set and points in the second point set respectively, so that a first mapping between the virtual scene and the monitoring video is formed;
a generation module, configured to generate a first video mesh according to the first mapping, wherein a texture of the first video mesh is at least a part of the monitoring video; and
a superimposing module, configured to superimpose and display the first video mesh on the virtual scene.

The present application further provides a 3D monitoring system, including a housing, a processor, a memory, a circuit board and a power supply circuit, wherein the circuit board is arranged inside a space enclosed by the housing, the processor and the memory are provided on the circuit board; the power supply circuit is configured to supply power for various circuits or elements of the 3D monitoring system; the memory is configured to store executable program code, and the processor executes a program corresponding to the executable program code by reading the executable program code stored in the memory to perform the rapid deployment method for a 3D monitoring system.

The present application further provides an application program performing the rapid deployment method for a 3D monitoring system when executed.

The present application further provides a storage medium, configured to store an application program, which, when executed, performs the rapid deployment method for a 3D monitoring system.

Compared to the prior art, the main difference and effect of the embodiments of the present application are: two corresponding point sets are obtained through an input device respectively in a virtual scene and in a monitoring video, so as to obtain a mapping between the virtual scene and the monitoring video; and a video mesh, to be superimposed and displayed on the virtual scene, is generated based on this mapping. Thus, a 3D monitoring system can be rapidly deployed without calibrations of intrinsic and extrinsic parameters of cameras, and requirements on accuracy in matching between a 3D monitoring scene and an actual monitored site are decreased, greatly reducing the difficulty in system deployment while ensuring the effect of superimposing a monitoring video on a virtual scene.

Further, the first and second point sets contain at least four feature points at the boundaries of regions respectively, and the boundaries of pictures in a video superimposed on a virtual scene is determined based on these feature points. Thus, the boundaries of pictures in monitoring videos can match the virtual scene very well even in a complex scene without serious distortion.

Further, 3D feature points in the first point set can be projected to a 2D space constituted by the second point set, by triangulating the first and second point sets and then performing video superimposition, to perform monitoring video superimposition more accurately.

Further, it can reduce the distortion in a mapped monitoring video, by determining whether the difference between the angle between any two edges of a triangle mesh of the first point set and the angle between corresponding two edges of a corresponding triangle mesh of the second point set is less than a preset threshold.

Further, a plurality of video meshes are generated for a same monitoring video in the virtual scene, which can lead to accurate access right control over the regions in the monitoring video and effectively alleviate the issues for high edge distortions caused by overabundance of feature points.

### BRIEF DESCRIPTION OF DRAWINGS

Fig. 1 is a schematic flowchart of a rapid deployment method for a 3D monitoring system according to a first embodiment of the present application;
Fig. 2 is a schematic flowchart of a rapid deployment method for a 3D monitoring system according to the first embodiment of the present application;
Fig. 3 is a schematic diagram illustrating triangulation of a point set in the rapid deployment method for a 3D monitoring system according to a second embodiment of the present application;
Fig. 4 is a schematic flowchart of a rapid deployment method for a 3D monitoring system according to the second embodiment of the present application;
Fig. 5 is a schematic flowchart of selecting feature points and generating a mesh model in the rapid deployment method for a 3D monitoring system according to the second embodiment of the present application;
Fig. 6 is a schematic structural diagram of a 3D monitoring system according to the second embodiment of the present application;
Fig. 7 is a schematic structural diagram of a 3D monitoring system according to a third embodiment of the present application;
Fig. 8 is a schematic structural diagram of a generation module in a 3D monitoring system according to a fourth embodiment of the present application.

### DETAILED DESCRIPTION

In the following description, many technical details are set forth to help readers to better understand the present application. However, a person having ordinary skills in the art can understand the technical solutions claimed in the claims of the present application can be realized even without these technical details as well as variations and modifications based on the following embodiments.

In order to make the objectives, the technical solutions, and the advantages of the present application more clear, the embodiments of the present application will be described in further details in conjunction with the accompanying drawings.

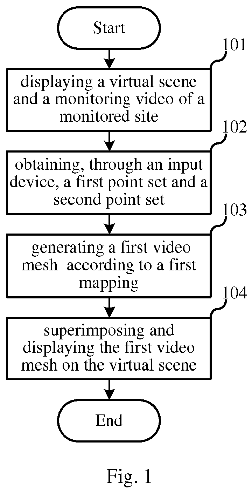

The first embodiment of the present application relates to a rapid deployment method for a 3D monitoring system. Fig. 1 is a schematic flowchart of this rapid deployment method for a 3D monitoring system. As shown in Fig. 1, the rapid deployment method for a 3D monitoring system includes:
Step 101, displaying a virtual scene and a monitoring video of a monitored site. The virtual scene should be established in advance for the monitored site. One or more camera devices are arranged at different locations in the monitored site. It is possible to display monitoring videos from all the camera devices arranged in the monitored site in a plurality of windows at the same time, or only display a monitoring video of one camera device in one window.
Step 102, obtaining, through an input device, N points selected in the virtual scene as a first point set, and obtaining, through an input device, N points selected in the monitoring video as a second point set, wherein N is greater than 2, and there is a one-to-one correspondence between points in the first point set and points in the second point set respectively, so that a first mapping between the virtual scene and the monitoring video is formed.

The input device can be a mouse, a touch pad, a touch screen, a stylus, and the like. A same input device or different input devices can be used to select points in the virtual scene and in the monitoring video. For example, a mouse is used to select points in the virtual scene, and a touch screen is used to select points in the monitoring video.

As an optional embodiment, the first point set is used to select a first region in the virtual scene, and the second point set is used to select a second region in the monitoring video. The first point set contains at least four feature points located at the boundary of the selected first region, and the second point set contains at least four feature points located at the boundary of the selected second region, such as the four corner points of a gate. The first and second point sets each contains at least four feature points at the boundaries of regions, and the boundary of a picture in a video superimposed on the virtual scene can be determined based on these feature points. Thus, the boundary of the picture in the monitoring video can match with the virtual scene very well without serious distortion even in a complex scene. In addition, in another example, the first point set can contain three or more than four feature points located at the boundary of a selected image, and this is also true for the second point set.

Preferably, the first point set contains at least one feature point located within the selected first region, and the second point set contains at least one feature point located within the selected second region, such as a door handle. In addition, in another example, the first point set may contain no feature point located within the selected first region or may contain a plurality of feature points located within the selected first region, and a similar situation applies to the second point set.

Step 103, generating a first video mesh according to the first mapping, wherein a texture of the first video mesh is at least a part of the monitoring video. The video mesh is a mesh model used to carry pictures of a monitoring video, and video data is used as the texture of this mesh and is updated in real time so that the video is fused in the virtual scene.

Step 104, superimposing and displaying the first video mesh on the virtual scene.

Two corresponding point sets are obtained through an input device respectively in a virtual scene and in a monitoring video, so as to obtain a mapping between the virtual scene and the monitoring video; and a video mesh, to be superimposed and displayed on the virtual scene, is generated based on this mapping. Thus, a 3D monitoring system can be rapidly deployed without calibrations of intrinsic and extrinsic parameters of cameras, and the requirement on accuracy in matching between a 3D monitoring scene and an actual monitored site is decreased, which greatly reduces the difficulty in system deployment while ensuring the effect of superimposing a monitoring video on a virtual scene.

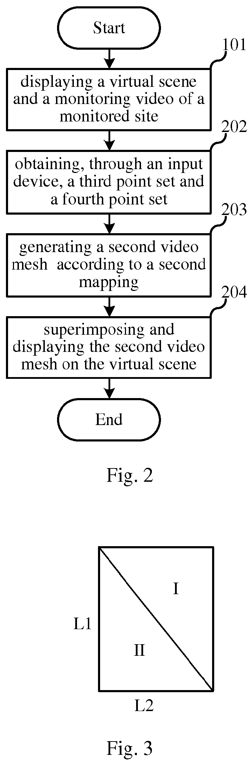

In a preferred embodiment, as shown in Fig. 2, after the step 101, the method further includes:
Step 202, obtaining, through an input device, N points selected in the virtual scene as a third point set, and obtaining, through an input device, N points selected in the same monitoring video as a fourth point set, wherein N is greater than 2, and there is a one-to-one correspondence between points in the third point set and points in the fourth point set respectively, so that a second mapping between the virtual scene and the monitoring video is formed.
Step 203, generating a second video mesh according to the second mapping, wherein a texture of the second video mesh is at least a part of the same monitoring video.
Step 204, superimposing and displaying the second video mesh on the virtual scene.

In the virtual scene, a plurality of video meshes are generated for a same monitoring video, which can perform accurate access right control over regions in this monitoring video, simplify the arrangement of camera devices, and effectively alleviate the issues for high edge distortions caused by overabundance of feature points.

In the above preferred examples, the texture of the first video mesh and the texture of the second video mesh are a first part and a second part in the same monitoring video. In various embodiments of the present application, there may be or may not be an overlap between the first part and the second part, in order to carry out accurate access right control according to actual requirements. For example, the first part and the second part are two regions in the same monitoring video and there is no overlap between the two regions, and the two regions can thus be monitored separately; alternatively, the first part is the whole region in the monitoring video, and the second part is only a certain region in this monitoring video, such as a window or a door, and the regions can thus be monitored according to related access rights.

It can be understood, steps 102 to 104 and steps 202 to 204 can be performed simultaneously or successively.

In addition, in other embodiments of the present application, it is also possible to generate only one video mesh for one monitoring video in a virtual scene, and in this case, the technical solutions of the present application can also be accomplished.

The second embodiment of the present application relates to a rapid deployment method for a 3D monitoring system. In the second embodiment, the following two improvements have been made on the basis of the first embodiment.

The first improvement is that 3D feature points in the first point set can be projected to a 2D space constituted by the second point set, by triangulating the first and second point sets and then performing video superimposition, so as to perform monitoring video superimposition more accurately. Specifically, step 103 includes:
triangulating the first and second point sets respectively to generate triangle meshes, e.g., as shown in Fig. 3, two triangles I and II are formed by four points, and there is a certain angle between the edges of the triangles I and II;
superimposing a monitoring video corresponding to a triangle mesh of the second point set, as a texture, onto a corresponding triangle mesh of the first point set according to the first mapping to generate the first video mesh.

Three points can form a face, and triangulation is to connect various points to form triangle meshes. After triangulation of the first point set, one or more faces can be formed by various 3D feature points in the first point set. The monitoring video in each of the faces formed by the second point set is superimposed onto a corresponding face formed by the 3D feature points in the first point set according to the first mapping, and appropriate adjustment can be performed if needed, such that the monitoring video superimposition can be carried out more accurately.

In addition, in other embodiments of the present application, it is also possible not to triangulate the point sets, or, other mesh processing can be performed on the point sets according to actual requirements, e.g., processing of a quadrangle mesh or a mesh of other shapes.

The second improvement is determining whether the difference between the angle between any two edges of the triangle mesh of the first point set and the angle between corresponding two edges of the corresponding triangle mesh of the second point set is less than a preset threshold, which can lead to a less distortion in pictures of a monitoring video after being mapped.

After the step of triangulating the first and second point sets respectively to generate triangle meshes, and before the step of superimposing a monitoring video corresponding to a triangle mesh of the second point set, as a texture, onto a corresponding triangle mesh of the first point set according to the first mapping to generate the first video mesh, the method further includes:
determining whether the difference between the angle between any two edges of the triangle mesh of the first point set and the angle between corresponding two edges of the corresponding triangle mesh of the second point set (such as, the angle between the edges L1 and L2 as shown in Fig. 3) is less than a preset threshold;
if the difference is less than the preset threshold, superimposing a monitoring video corresponding to the triangle mesh of the second point set, as a texture, onto the corresponding triangle mesh of the first point set according to the first mapping to generate the first video mesh; otherwise, returning to step 102 to obtain the point sets again.

That is, if it is determined that the difference between the angle between any two edges of a triangle mesh of the first point set and the angle between corresponding two edges of a corresponding triangle mesh of the second point set is less than the preset threshold, the following step will be performed: superimposing a monitoring video corresponding to the triangle mesh of the second point set, as a texture, onto the corresponding triangle mesh of the first point set according to the first mapping to generate the first video mesh. This preset threshold can be set according to actual situations and can be adjusted when necessary.

For a mesh of another shape, it can determine the difference between the angle between any two edges of each mesh, and the present application is not limited to the triangle mesh mentioned above.

In addition, in other embodiments of the present application, it is possible not to determine the difference of angles of two edges. Instead, it can determine the similarity of the geometric structure of each face formed by 3D feature points in the first point set with that in the second point set.

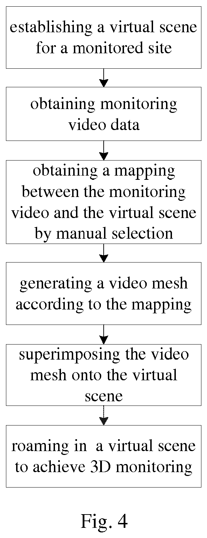

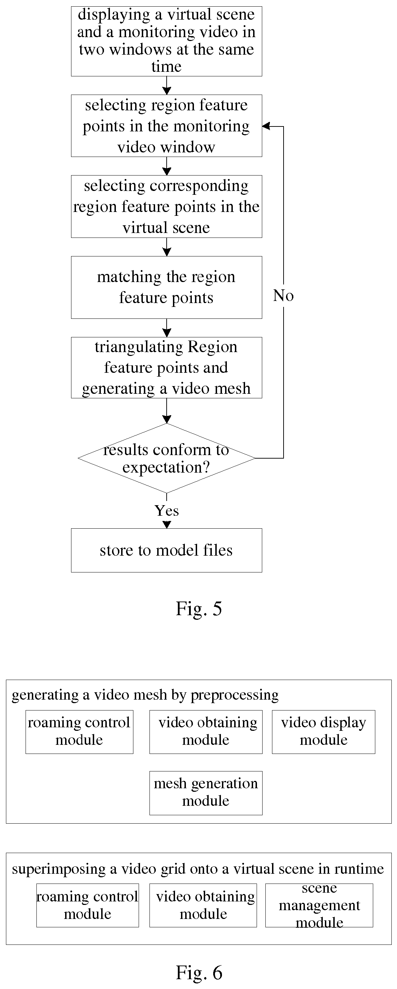

In a preferred example, the rapid deployment method for a 3D monitoring system, as shown in the overall flowchart of Fig. 4, includes: establishing a 3D virtual scene for a monitored site, obtaining video data from a video acquisition device (such as a camera device), obtaining a mapping between the monitoring video and the virtual scene by manual selection, generating a video mesh according to the mapping, superimposing the video mesh onto the original virtual scene, and building a virtual scene roaming system to accomplish the 3D monitoring. Virtual roaming is an important branch of virtual reality (VR) technology. It creates a virtual information environment in multi-dimensional information space, provides an immersive experience for users, has an enhanced ability to interact with the environment, and facilitates inspire conception. As shown in Fig. 5, obtaining a mapping between the monitoring video and the virtual scene by manual selection specifically includes: displaying the virtual scene and the monitoring video in two windows at the same time; adjusting the monitoring pose of the virtual scene to roughly match with the monitoring video region; selecting points at the boundary of a region in the monitoring video from a picture of the monitoring video by clicking with a mouse or by other ways (e.g., touching on a touch screen); selecting region feature points from a region in the virtual scene which corresponds to the region in the monitoring video, wherein the region feature points form 3D point cloud data; and generating a mesh model through mesh processing (wherein, the mesh is formed by connecting several 3D points and can have a variety of shapes, such as a triangle or a quadrangle). The relative coordinates of region feature points in the picture of the monitoring video are used as the texture coordinates of the corresponding region feature points in the virtual scene to determine a mapping. A video mesh is generated according to the mapping and the video mesh is superimposed and displayed on the virtual scene to achieve the 3D monitoring. In this process, region feature points can be selected for many times for the same monitoring video, and region feature points of the corresponding virtual scene are selected at the same time to generate a plurality of mesh models, which can lead to accurate access right control over the regions in the same monitoring video and effectively alleviate issues for high edge distortions caused by overabundance of feature points. Selection by clicking with a mouse refers to obtaining 2D/3D spatial coordinates of a corresponding point by clicking the mouse.

The process of matching the region feature points in Fig. 5 includes: projecting 3D feature points selected in a virtual scene of a monitored site to a 2D space; determining whether the geometric structure of each face formed by region feature points selected in the virtual scene is similar to that formed by region feature points in a picture of the monitoring video; and determining whether the difference between the angle between any two edges of the geometric structure of each face formed by region feature points selected in the virtual scene and the angle between corresponding edges in the monitoring video is smaller than a control threshold, if not, prompting to select again; which ensures a less distortion in the picture of the monitoring video after being mapped.

That is, the control threshold is the preset threshold, and can be adjusted according to the actual situation. If technology supports, the smaller the control threshold, the lower the distortion in a mapped picture of a monitoring video.

The rapid deployment method for a 3D monitoring system can be implemented on the following 3D monitoring system, which includes, for example, a roaming control module, a video display module, a video obtaining module, a scene management module, and a mesh generation module.

The roaming control module is configured for controlling viewpoint roaming, including, among others, cruise along a fixed line, cruise in a flight mode, and first person roaming.

The video obtaining module is configured for obtaining files or real-time streams, and for video decoding, data cache control, and the like.

The video display module is configured for displaying video data on a two-dimensional window for manual selection of feature points in a monitoring region, and for switching from 3D monitoring to 2D monitoring.

The scene management module is configured to manage the loading/unloading of a video mesh and add it to the 3D monitoring system by predicting the viewpoint at the next stage. In addition, the scene management module includes a superimposing module for superimposing and displaying the video mesh on a virtual scene.

The mesh generation module is configured to triangulate a 3D point cloud based on manually selected region feature points, and generate a video mesh and store it as model files on a storage medium for persistence.

The coordination relation between the above modules is shown in Fig. 6. Basically, there are two stages for the 3D monitoring system: a deployment stage and a stage of implementing the monitoring. The deployment stage is the stage of preprocessing to generate a video mesh, including: obtaining video images and the intuitive presentation of the video images by the video obtaining module and the video display module; obtaining a picture of a 3D scene by the roaming control module; obtaining feature points in a mapped video region and those in a 3D monitoring region by manually clicking with a mouse; generating the video mesh by the mesh generation module based on these feature points; and storing the generated video mesh on a storage medium for persistence. This process can be repeated to improve the effect of the fusion of the video and the virtual scene. In this process, a plurality of video meshes can be generated for the same monitoring video, which reduces the distortion in edges and accurately controls access rights. The stage of implementing the monitoring is superimposing the video mesh onto the virtual scene in runtime, including: the roaming control module controls the change of virtual viewpoints to obtain a real-time 3D picture; the scene management module predicts the operating trend of the viewpoints, calculates the visible range, performs loading/unloading operations on the video mesh, and controls the monitoring video to be displayed on the corresponding monitoring screen; the video obtaining module obtains video data in real time, and updates the corresponding video mesh with the video data, and accomplishes the superimposing of the video on the virtual scene, thus achieving the 3D monitoring.

As can be seen from above, with the rapid deployment method for a 3D monitoring system, the 3D monitoring system can be rapidly deployed without calibrations of intrinsic and extrinsic parameters of cameras, the requirement on accuracy in matching between a 3D monitoring scene and an actual monitored site is decreased greatly, reducing the difficulty in system deployment while ensuring the effect of superimposing a video on a virtual scene, and a part of content in one monitoring video can be shielded to accurately control access rights.

The above improvements are combined to form a preferable embodiment of the present application, but the improvements can also be applied separately. In this preferable embodiment, certain step(s) and/or module(s) can be added, adjusted or deleted as needed.

All embodiments of the method of the present application can be implemented as software, hardware, firmware, and the like. Instruction code can be stored in any type of computer accessible memories (such as, permanent or modifiable, volatile or non-volatile, solid or non-solid, fixed or replaceable media, etc.) no matter in which way (as software, hardware, or firmware) the above methods are implemented. Similarly, the memory can be such as a programmable array logic (PAL), a random access memory (RAM), a programmable read-only memory (PROM), a read-only memory (ROM), an electrically erasable programmable ROM (EEPROM), a disk, an optical disc, or a digital versatile disc (DVD).

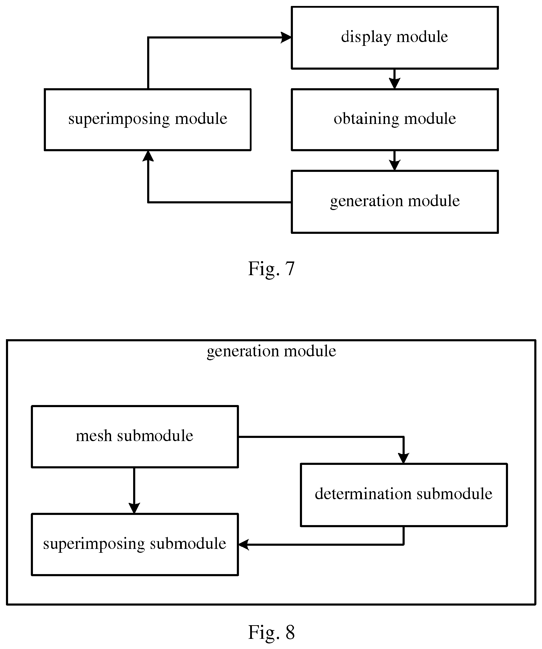

The third embodiment of the present application relates to a 3D monitoring system. Fig. 7 is a schematic structural diagram of the 3D monitoring system. As shown in Fig. 7, the 3D monitoring system includes:
a display module, configured to display a virtual scene and a monitoring video of a monitored site;
an obtaining module, configured to obtain, through an input device, N points selected in the virtual scene as a first point set, and obtain, through an input device, N points selected in the monitoring video as a second point set, wherein N is greater than 2, and there is a one-to-one correspondence between points in the first point set and points in the second point set respectively, so that a first mapping between the virtual scene and the monitoring video is formed.

The input device can be a mouse, a touch pad, a touch screen, a stylus, and the like. One input device or different input devices can be used to select points in the virtual scene and the monitoring video. For example, a mouse is used to select points in the virtual scene, and a touch screen is used to select points in the monitoring video.

As an optional embodiment, the first point set is used to select a first region in the virtual scene, and the second point set is used to select a second region in the monitoring video. The first point set contains at least four feature points located at the boundary of the selected first region, and second point set contains at least four feature points located at the boundary of the selected second region, such as the four corner points of a gate. The first and second point sets contain at least four feature points at the boundaries of regions respectively, and the boundary of a picture of a video superimposed on the virtual scene is determined based on these feature points. Thus, the boundary of the picture of the monitoring video can match with the virtual scene very well without serious distortion even in a complex scene. In addition, in another example, the first point set can contain three or more than four feature points located at the boundary of a selected image, and this situation is also true for the second point set.

Preferably, the first point set contains at least one feature point located within the selected first region, and the second point set contains at least one feature point located within the selected second region. In addition, in another example, the first point set may contain no feature point or may contain a plurality of feature points located within the selected regions, and a similar situation applies to the second point set.

A generation module, configured to generate a first video mesh according to the first mapping, wherein a texture of the first video mesh is at least a part of the monitoring video; and
a superimposing module, configured to superimpose and display the first video mesh on the virtual scene.

The obtaining module obtains two corresponding point sets through an input device respectively in a virtual scene and in a monitoring video, so as to obtain a mapping between the virtual scene and the monitoring video; and then the generation module generates, based on this mapping, a video mesh to be superimposed and displayed on the virtual scene. Thus, rapid deployment of a 3D monitoring system is achieved without calibrations of intrinsic and extrinsic parameters of cameras, and the requirement on accuracy in matching between a 3D monitoring scene and an actual monitored site is decreased, which greatly reduces the difficulty in system deployment while ensuring the effect of superimposing a monitoring video onto a virtual scene.

In an preferable example, the obtaining module is configured to obtain, through an input device, N points selected in the virtual scene as a third point set, and obtain, through an input device, N points selected in the same monitoring video as a fourth point set, wherein N is greater than 2, and there is a one-to-one correspondence between points in the third point set and points in the fourth point set respectively, so that a second mapping between the virtual scene and the monitoring video is formed.

The generation module is configured to generate a second video mesh according to the second mapping, wherein a texture of the second video mesh is at least a part of the same monitoring video.

The superimposing module is configured to superimpose and display the second video mesh on the virtual scene.

A plurality of video meshes are generated for the same monitoring video in a virtual scene, which can perform accurate access right control over the regions in this monitoring video, simplify the arrangements of cameras, and effectively alleviates the issues for high edge distortions caused by overabundance of feature points.

In the above preferred examples, the texture of the first video mesh and that of the second video mesh can be a first part and a second part of the same monitoring video, respectively. In various embodiments of the present application, there may be or may be not an overlap between the first part and the second part, to carry out accurate access right control as needed. For example, the first part and the second part are two regions in a same monitoring video without being overlapped with each other, and the two regions can thus be monitored separately; or, the first part is the whole region in the monitoring video, and the second part is only a certain region in this monitoring video, such as a window, a door, and the regions can thus be monitored according to corresponding access rights.

In addition, in other embodiments of the present application, it is also possible to generate only one video mesh for one monitoring video in a virtual scene.

The first embodiment is an embodiment of a method corresponding to this embodiment, which can be implemented in conjunction with the first embodiment. The relevant technical details mentioned in the first embodiment can also be applied to this embodiment, which are not described again for clarify. Accordingly, the relevant technical details mentioned in this embodiment can also be applied to the first embodiment.

The fourth embodiment of the present application relates to a rapid deployment system for a 3D monitoring system. In the fourth embodiment, two improvements have been made on the basis of the third embodiment.

The first improvement is that 3D feature points in the first point set can be projected to a 2D space constituted by the second point set, by triangulating the first and second point sets and then performing video superimposition, so as to perform monitoring video superimposition more accurately.

Specifically, as shown in Fig. 8, the generation module includes the following submodules:
a mesh submodule, configured to triangulate the first and second point sets respectively to generate triangle meshes,
a superimposing submodule, configured to superimpose a monitoring video corresponding to a triangle mesh of the second point set, as a texture, onto a corresponding triangle mesh of the first point set according to the first mapping to generate the first video mesh.

Three points can form a face, after triangulation of the first point set, one or more faces can be formed by various 3D feature points in the first point set. The monitoring video in each of the faces formed by the second point set is superimposed onto the corresponding face formed by 3D feature points in the first point set according to the first mapping, appropriate adjustment can be performed as needed, so that monitoring video superimposition can be carried out more accurately.

In addition, in other embodiments of the present application, it is also possible not to triangulate the point sets, or, other mesh processing can be performed on the point sets as needed, e.g., quadrangle mesh processing or processing of a mesh of other shapes.

The second improvement is determining whether the difference between the angle between any two edges of the triangle mesh of the first point set and the angle between corresponding two edges of the corresponding triangle mesh of the second point set is less than a preset threshold, which can lead to less distortions in pictures of a monitoring video after being mapped.

Specifically, as shown in Fig. 8, the generation module further includes a determination submodule configured to determine whether the difference between the angle between any two edges of the triangle mesh of the first point set generated by the mesh submodule and the angle between corresponding two edges of the corresponding triangle mesh of the second point set is less than a preset threshold.

The superimposing submodule is configured to, in response to a determination from the determination submodule that the difference is less than the preset threshold, superimpose a monitoring video corresponding to the triangle mesh of the second point set, as a texture, onto the corresponding triangle mesh of the first point set according to the first mapping to generate the first video mesh.

For a mesh of another shape, it can determine the difference of the angle between any two edges of each mesh, and the present application is not limited to the triangle mesh mentioned above.

In addition, in other embodiments of the present application, it is also possible not to determine the difference between angles of two edges. Instead, it can determine the similarity of the geometric structure of each face formed by 3D feature points in the first point set with that in the second point set.

The second embodiment is an embodiment of a method corresponding to this embodiment, which can be implemented in conjunction with the second embodiment. The relevant technical details mentioned in the second embodiment can applied to this embodiment, and will not be described again to reduce duplication. Accordingly, the relevant technical details mentioned in this embodiment can also be applied to the second embodiment.

In summary, the 3D monitoring system and the rapid deployment method for the same in the present application mainly have the following advantages:
1. The correspondence between a monitoring video and a virtual scene is obtained by manual selection of regions, and thus no calibration of intrinsic and extrinsic parameters of cameras is required, which decreases requirements on accuracy in matching between a 3D monitoring scene and an actual monitored site.
2. It is possible that one monitoring camera corresponds to a plurality of mesh regions in the virtual scene, which can shield a part of content within one monitoring video while reducing the distortion of the boundaries.

In other words, one monitoring camera can correspond to one monitoring scene. Specifically, in the embodiments of the present application, one monitoring scene can correspond to a plurality of mesh regions in the virtual scenes. Feature points are selected at the boundaries of the selected first and second regions, the boundary of a video picture to be superimposed onto the virtual scene is determined based on these feature points, and thus a part of the content within one monitoring video can be shield while reducing the distortion of the boundary, and accurately control access rights.

An embodiment of the present application provides a 3D monitoring system, including a housing, a processor, a memory, a circuit board and a power supply circuit, wherein the circuit board is arranged inside a space enclosed by the housing, the processor and the memory are provided on the circuit board; the power supply circuit is configured to supply power for various circuits or elements of the 3D monitoring system; the memory is configured to store executable program code, and the processor executes a program corresponding to the executable program code by reading the executable program code stored in the memory so as to perform the following steps:
displaying a virtual scene and a monitoring video of a monitored site;
obtaining, through an input device, N points selected in the virtual scene as a first point set, and obtaining, through an input device, N points selected in the monitoring video as a second point set, wherein N is greater than 2, and there is a one-to-one correspondence between points in the first point set and points in the second point set respectively, so that a first mapping between the virtual scene and the monitoring video is formed;
generating a first video mesh according to the first mapping, wherein a texture of the first video mesh is at least a part of the monitoring video; and
superimposing and displaying the first video mesh on the virtual scene.

By applying embodiments of the present application, two corresponding point sets are obtained through an input device respectively in the virtual scene and in the monitoring video, so as to obtain a mapping between the virtual scene and the monitoring video; and a video mesh, to be superimposed and displayed on the virtual scene, is generated based on this mapping. Thus, rapid deployment of a 3D monitoring system is achieved without calibration in intrinsic and extrinsic parameters of cameras, and the requirement on accuracy in matching between a 3D monitoring scene and an actual monitored site is decreased, greatly reducing the difficulty in system deployment while ensuring the effect of superimposing the monitoring video onto the virtual scene.

An embodiment of the present application provides an application program for performing the rapid deployment method for a 3D monitoring system, wherein the method can include:
displaying a virtual scene and a monitoring video of a monitored site;
obtaining, through an input device, N points selected in the virtual scene as a first point set, and obtaining, through an input device, N points selected in the monitoring video as a second point set, wherein N is greater than 2, and there is a one-to-one correspondence between points in the first point set and points in the second point set respectively, so that a first mapping between the virtual scene and the monitoring video is formed;
generating a first video mesh according to the first mapping, wherein a texture of the first video mesh is at least a part of the monitoring video; and
superimposing and displaying the first video mesh on the virtual scene.

By applying embodiments of the present application, two corresponding point sets are obtained through an input device respectively in a virtual scene and a monitoring video, so as to obtain a mapping between the virtual scene and the monitoring video; and a video mesh, to be superimposed and displayed on the virtual scene, is generated based on this mapping. Thus, a 3D monitoring system can be rapidly deployed without calibrations in intrinsic and extrinsic parameters of a camera, and requirements on accuracy in matching between a 3D monitoring scene and an actual monitored site are decreased to greatly reduce the difficulty in system deployment while ensuring the effect of superimposing the monitoring video onto the virtual scene.

An embodiment of the present application provides a storage medium, which is used for storing an application program configured to perform the rapid deployment method for a 3D monitoring system, wherein the method can include:
displaying a virtual scene and a monitoring video of a monitored site;
obtaining, through an input device, N points selected in the virtual scene as a first point set, and obtaining, through an input device, N points selected in the monitoring video as a second point set, wherein N is greater than 2, and there is a one-to-one correspondence between points in the first point set and points in the second point set respectively, so that a first mapping between the virtual scene and the monitoring videos if formed;
generating a first video mesh according to the first mapping, wherein a texture of the first video mesh is at least a part of the monitoring video; and
superimposing and displaying the first video mesh on the virtual scene.

By applying embodiments of the present application, two corresponding point sets are obtained through an input device respectively in a virtual scene and a monitoring video, so as to obtain a mapping between the virtual scene and the monitoring video; and a video mesh, to be superimposed and displayed on the virtual scene, is generated based on this mapping. Thus, rapid deployment of a 3D monitoring system is achieved without calibration of intrinsic and extrinsic parameters of a camera, and the requirement on accuracy in matching between a 3D monitoring scene and an actual monitored site is decreased to greatly reduce the difficulty in system deployment while ensuring the effect of superimposing a monitoring video onto a virtual scene.

The embodiments of the system, the application program and the storage medium are briefly described, and reference can be made to the description of the embodiments of the method for its related contents since the embodiments of the system, application program and storage medium are substantially similar to those of the method.

It should be noted that, all the units mentioned in the embodiments of a device in the present application are logical units. Physically, a logical unit may be a physical unit, a part of a physical unit, or a combination of a plurality of physical units. It is not important that how the logical units are physically implemented, while the combination of functions accomplished by these logical units is the key to solve the technical problems put forward in the present application. In addition, in order to highlight the inventive part of the present application, units that are not closely related to the technical problems put forward herein are not described in the above system embodiments of the present application, which does not indicate that there are no other units in the above system embodiments.

It should be noted that the relationship terms in the claims and the description of the present application such as "first", "second" and the like are only used to distinguish one entity or operation from another entity or operation, but do not necessarily require or imply that there is actual relationship or order between these entities or operations. Moreover, the terms "include", "comprise" or any variants thereof are intended to cover a non-exclusive inclusion, such that processes, methods, articles or devices comprising a series of elements comprise not only those elements listed, but also other elements not specifically listed or elements intrinsic to these processes, methods, articles, or devices. Without further limitations, elements limited by such phrase "comprise(s) a/an..." do not exclude that there are additional identical elements in the processes, methods, articles, or devices, which comprise the listed elements.

The present application has been illustrated and described with reference to certain preferred embodiments, a person having ordinary skills in the art would understand that various modifications may be made in form and detail without departing from the scope of the present application.

## Claims

1. A rapid deployment method for a 3D monitoring system, comprising:
displaying a virtual scene and a monitoring video of a monitored site;
obtaining, through an input device, N points selected in the virtual scene as a first point set, and obtaining, through an input device, N points selected in the monitoring video as a second point set, wherein N is greater than 2, and there is a one-to-one correspondence between points in the first point set and points in the second point set respectively, so that a first mapping between the virtual scene and the monitoring video is formed;
generating a first video mesh according to the first mapping, wherein a texture of the first video mesh is at least a part of the monitoring video; and
superimposing and displaying the first video mesh on the virtual scene,
wherein generating a first video mesh according to the first mapping comprises:
triangulating the first and second point sets respectively to generate triangle meshes;
**characterised in that**
determining whether the difference between the angle between any two edges of the triangle mesh of the first point set and the angle between corresponding two edges of the corresponding triangle mesh of the second point set is less than a preset threshold; and
if the difference is less than the preset threshold, superimposing a monitoring video corresponding to the triangle mesh of the second point set, as a texture, onto the corresponding triangle mesh of the first point set according to the first mapping to generate the first video mesh,
if the difference is not less than the preset threshold, returning to the obtaining of the first point set and the second point set to obtain the first point set and the second point set again.

2. The rapid deployment method for a 3D monitoring system of claim 1, wherein the first point set is used to select a first region in the virtual scene, and the second point set is used to select a second region in the monitoring video;
the first point set contains at least four feature points located at the boundary of the selected first region, and the second point set contains at least four feature points located at the boundary of the selected second region.

3. The rapid deployment method for a 3D monitoring system of claim 1, wherein
the first point set is used to select a first region in the virtual scene, and the second point set is used to select a second region in the monitoring video;
the first point set contains at least one feature point located in the interior of the selected first region, and the second point set contains at least one feature point located in the interior of the selected second region.

4. The rapid deployment method for a 3D monitoring system of any of claims 1 to 3, wherein after the step of displaying a virtual scene and a monitoring video of a monitored site, the method further comprises:
obtaining, through an input device, N points selected in the virtual scene as a third point set, and obtaining, through an input device, N points selected in the same monitoring video as a fourth point set, wherein N is greater than 2, and there is a one-to-one correspondence between points in the third point set and points in the fourth point set respectively, so that a second mapping between the virtual scene and the monitoring video is formed;
generating a second video mesh according to the second mapping, wherein a texture of the second video mesh is at least a part of the same monitoring video; and
superimposing and displaying the second video mesh on the virtual scene.

5. A 3D monitoring system, comprising:
a display module, configured to display a virtual scene and a monitoring video of a monitored site;
an obtaining module, configured to obtain, through an input device, N points selected in the virtual scene as a first point set, and obtain, through an input device, N points selected in the monitoring video as a second point set, wherein N is greater than 2, and there is a one-to-one correspondence between points in the first point set and points in the second point set respectively, so that a first mapping between the virtual scene and the monitoring video is formed;
a generation module, configured to generate a first video mesh according to the first mapping, wherein a texture of the first video mesh is at least a part of the monitoring video; and
a superimposing module, configured to superimpose and display the first video mesh on the virtual scene,
wherein the generation module comprises the following submodules:
a mesh submodule, configured to triangulate the first and second point sets respectively to generate triangle meshes; and
a superimposing submodule, configured to superimpose a monitoring video corresponding to a triangle mesh of the second point set, as a texture, onto a corresponding triangle mesh of the first point set according to the first mapping to generate the first video mesh,
**characterised in that**
wherein the generation module further comprises a determination submodule configured to determine whether the difference between the angle between any two edges of the triangle mesh of the first point set generated by the mesh submodule and the angle between corresponding two edges of the corresponding triangle mesh of the second point set is less than a preset threshold; and
the superimposing submodule is configured to, in response to a determination from the determination submodule that the difference is less than the preset threshold, superimpose a monitoring video corresponding to the triangle mesh of the second point set, as a texture, onto the corresponding triangle mesh of the first point set according to the first mapping to generate the first video mesh,
in response to a determination from the determination submodule that the difference is not less than the preset threshold, the obtaining module obtains the first point set and the second point set again.

6. The 3D monitoring system of claim 5, wherein the first point set is used to select a first region in the virtual scene, and the second point set is used to select a second region in the monitoring video;
the first point set contains at least four feature points located at the boundary of the selected first region, and the second point set contains at least four feature points located at the boundary of the selected second region.

7. The 3D monitoring system of claim 5, wherein the first point set is used to select a first region in the virtual scene, and the second point set is used to select a second region in the monitoring video;
the first point set contains at least one feature point located in the interior of the selected first region, and the second point set contains at least one feature point located in the interior of the selected second region.

8. The 3D monitoring system of any of claims 5 to 7, wherein the obtaining module is configured to obtain, through an input device, N points selected in the virtual scene as a third point set, and obtain, through an input device, N points selected in the same monitoring video as a fourth point set, wherein N is greater than 2, and there is a one-to-one correspondence between points in the third point set and points in the fourth point set respectively, so that a second mapping between the virtual scene and the monitoring video is formed;
the generation module is configured to generate a second video mesh according to the second mapping, wherein a texture of the second video mesh is at least a part of the same monitoring video; and
the superimposing module is configured to superimpose and display the second video mesh on the virtual scene.

9. A 3D monitoring system, comprising a housing, a processor, a memory, a circuit board and a power supply circuit, wherein the circuit board is arranged inside a space enclosed by the housing, the processor and the memory are provided on the circuit board; the power supply circuit is configured to supply power for various circuits or elements of the 3D monitoring system; the memory is configured to store executable program code, and the processor executes a program corresponding to the executable program code by reading the executable program code stored in the memory to perform the rapid deployment method for a 3D monitoring system of any one of claims 1 to 4.

10. An application program, which, when executed, performs the rapid deployment method for a 3D monitoring system of any one of claims 1 to 4.

11. A storage medium for storing an application program that, when executed, performs the rapid deployment method of any one of claims 1 to 4.

## Patentansprüche

1. Schnelleinsatzverfahren für ein 3D-Überwachungssystem, umfassend:
Anzeigen einer virtuellen Szene und eines Überwachungsvideos eines überwachten Orts;
Erhalten, durch eine Eingabevorrichtung, von N in der virtuellen Szene ausgewählten Punkten als einen ersten Punktsatz, und Erhalten, durch eine Eingabevorrichtung, von N in dem Überwachungsvideo ausgewählten Punkten als einen zweiten Punktsatz, wobei N größer als 2 ist und eine Eins-zu-eins-Entsprechung zwischen Punkten in dem ersten Punktsatz beziehungsweise Punkten in dem zweiten Punktsatz besteht, sodass eine erste Zuordnung zwischen der virtuellen Szene und dem Überwachungsvideo ausgebildet wird;
Erzeugen eines ersten Videonetzes gemäß der ersten Zuordnung, wobei eine Textur des ersten Videonetzes mindestens ein Teil des Überwachungsvideos ist; und
Überlagern und Anzeigen des ersten Videonetzes auf der virtuellen Szene,
wobei das Erzeugen eines ersten Videonetzes gemäß der ersten Zuordnung umfasst:
Triangulieren des ersten beziehungsweise des zweiten Punktsatzes, um Dreiecksnetze zu erzeugen;
**dadurch gekennzeichnet, dass**
Bestimmen, ob die Differenz zwischen dem Winkel zwischen zwei beliebigen Kanten des Dreiecksnetzes des ersten Punktsatzes und dem Winkel zwischen entsprechenden zwei Kanten des entsprechenden Dreiecksnetzes des zweiten Punktsatzes kleiner als ein voreingestellter Schwellenwert ist; und
falls die Differenz kleiner als der voreingestellte Schwellenwert ist, Überlagern eines Überwachungsvideos, das dem Dreiecksnetz des zweiten Punktsatzes entspricht, als eine Textur auf das entsprechende Dreiecksnetz des ersten Punktsatzes gemäß der ersten Zuordnung, um das erste Videonetz zu erzeugen,
falls die Differenz nicht kleiner als der voreingestellte Schwellenwert ist, Zurückkehren zu dem Erhalten des ersten Punktsatzes und des zweiten Punktsatzes, um den ersten Punktsatz und den zweiten Punktsatz erneut zu erhalten.

2. Schnelleinsatzverfahren für ein 3D-Überwachungssystem nach Anspruch 1, wobei der erste Punktsatz verwendet wird, um einen ersten Bereich in der virtuellen Szene auszuwählen, und der zweite Punktsatz verwendet wird, um einen zweiten Bereich in dem Überwachungsvideo auszuwählen;
der erste Punktsatz mindestens vier Merkmalspunkte enthält, die sich an der Grenze des ausgewählten ersten Bereichs befinden, und der zweite Punktsatz mindestens vier Merkmalspunkte enthält, die sich an der Grenze des ausgewählten zweiten Bereichs befinden.

3. Schnelleinsatzverfahren für ein 3D-Überwachungssystem nach Anspruch 1, wobei
der erste Punktsatz verwendet wird, um einen ersten Bereich in der virtuellen Szene auszuwählen, und der zweite Punktsatz verwendet wird, um einen zweiten Bereich in dem Überwachungsvideo auszuwählen;
der erste Punktsatz mindestens einen Merkmalspunkt enthält, der sich im Inneren des ausgewählten ersten Bereichs befindet, und der zweite Punktsatz mindestens einen Merkmalspunkt enthält, der sich im Inneren der ausgewählten zweiten Region befindet.

4. Schnelleinsatzverfahren für ein 3D-Überwachungssystem nach einem der Ansprüche 1 bis 3, wobei das Verfahren nach dem Schritt des Anzeigens einer virtuellen Szene und eines Überwachungsvideos eines überwachten Orts ferner umfasst:
Erhalten, durch eine Eingabevorrichtung, von N in der virtuellen Szene ausgewählten Punkten als einen dritten Punktsatz, und Erhalten, durch eine Eingabevorrichtung, von N in dem gleichen Überwachungsvideo ausgewählten Punkten als einen vierten Punktsatz, wobei N größer als 2 ist und eine Eins-zu-eins-Entsprechung zwischen Punkten in dem dritten Punktsatz beziehungsweise Punkten in dem vierten Punktsatz besteht, sodass eine zweite Zuordnung zwischen der virtuellen Szene und dem Überwachungsvideo ausgebildet wird;
Erzeugen eines zweiten Videonetzes gemäß der zweiten Zuordnung, wobei eine Textur des zweiten Videonetzes mindestens ein Teil desselben Überwachungsvideos ist; und
Überlagern und Anzeigen des zweiten Videonetzes auf der virtuellen Szene.

5. 3D-Überwachungssystem, umfassend:
ein Anzeigemodul, das konfiguriert ist, um eine virtuelle Szene und ein Überwachungsvideo eines überwachten Orts anzuzeigen;
ein Erhaltemodul, das konfiguriert ist, um durch eine Eingabevorrichtung N in der virtuellen Szene ausgewählte Punkte als einen ersten Punktsatz zu erhalten und durch eine Eingabevorrichtung N in dem Überwachungsvideo ausgewählte Punkte als einen zweiten Punktsatz zu erhalten, wobei N größer als 2 ist und eine Eins-zueins-Entsprechung zwischen Punkten in dem ersten Punktsatz beziehungsweise Punkten in dem zweiten Punktsatz besteht, sodass eine erste Zuordnung zwischen der virtuellen Szene und dem Überwachungsvideo ausgebildet wird;
ein Erzeugungsmodul, das konfiguriert ist, um ein erstes Videonetz gemäß der ersten Zuordnung zu erzeugen, wobei eine Textur des ersten Videonetzes mindestens ein Teil des Überwachungsvideos ist; und
ein Überlagerungsmodul, das konfiguriert ist, um das erste Videonetz auf der virtuellen Szene zu überlagern und anzuzeigen,
wobei das Erzeugungsmodul die folgenden Untermodule umfasst:
ein Netzuntermodul, das konfiguriert ist, um den ersten beziehungsweise den zweiten Punktsatz zu triangulieren, um Dreiecksnetze zu erzeugen; und
ein Überlagerungsuntermodul, das konfiguriert ist, um ein Überwachungsvideo, das einem Dreiecksnetz des zweiten Punktsatzes entspricht, als eine Textur auf ein entsprechendes Dreiecksnetz des ersten Punktsatzes gemäß der ersten Zuordnung zu überlagern, um das erste Videonetz zu erzeugen,
**dadurch gekennzeichnet, dass**
wobei das Erzeugungsmodul ferner ein Bestimmungsuntermodul umfasst, das konfiguriert ist, um zu bestimmen, ob die Differenz zwischen dem Winkel zwischen zwei beliebigen Kanten des Dreiecksnetzes des ersten Punktsatzes, das durch das Netzuntermodul erzeugt wird, und dem Winkel zwischen den entsprechenden zwei Kanten des entsprechenden Dreiecksnetzes des zweiten Punktsatzes kleiner als ein voreingestellter Schwellenwert ist; und
das Überlagerungsuntermodul konfiguriert ist, um als Reaktion auf eine Bestimmung von dem Bestimmungsuntermodul, dass die Differenz kleiner als der voreingestellte Schwellenwert ist, ein Überwachungsvideo, das dem Dreiecksnetz des zweiten Punktsatzes entspricht, als eine Textur auf das entsprechende Dreiecksnetz des ersten Punktsatzes gemäß der ersten Zuordnung zu überlagern, um das erste Videonetz zu erzeugen,
als Reaktion auf eine Bestimmung von dem Bestimmungsuntermodul, dass die Differenz nicht kleiner als der voreingestellte Schwellenwert ist, das Erhaltemodul den ersten Punktesatz und den zweiten Punktesatz erneut erhält.

6. 3D-Überwachungssystem nach Anspruch 5, wobei der erste Punktsatz verwendet wird, um einen ersten Bereich in der virtuellen Szene auszuwählen, und der zweite Punktsatz verwendet wird, um einen zweiten Bereich in dem Überwachungsvideo auszuwählen;
der erste Punktsatz mindestens vier Merkmalspunkte enthält, die sich an der Grenze des ausgewählten ersten Bereichs befinden, und der zweite Punktsatz mindestens vier Merkmalspunkte enthält, die sich an der Grenze des ausgewählten zweiten Bereichs befinden.

7. 3D-Überwachungssystem nach Anspruch 5, wobei der erste Punktsatz verwendet wird, um einen ersten Bereich in der virtuellen Szene auszuwählen, und der zweite Punktsatz verwendet wird, um einen zweiten Bereich in dem Überwachungsvideo auszuwählen;
der erste Punktsatz mindestens einen Merkmalspunkt enthält, der sich im Inneren des ausgewählten ersten Bereichs befindet, und der zweite Punktsatz mindestens einen Merkmalspunkt enthält, der sich im Inneren der ausgewählten zweiten Region befindet.

8. 3D-Überwachungssystem nach einem der Ansprüche 5 bis 7, wobei das Erhaltemodul konfiguriert ist, um durch eine Eingabevorrichtung N in der virtuellen Szene ausgewählte Punkte als einen dritten Punktsatz zu erhalten und durch eine Eingabevorrichtung N in dem gleichen Überwachungsvideo ausgewählte Punkte als einen vierten Punktsatz zu erhalten, wobei N größer als 2 ist und eine Eins-zu-eins-Entsprechung zwischen Punkten in dem dritten Punktsatz beziehungsweise Punkten in dem vierten Punktsatz besteht, sodass eine zweite Zuordnung zwischen der virtuellen Szene und dem Überwachungsvideo ausgebildet wird;
das Erzeugungsmodul konfiguriert ist, um ein zweites Videonetz gemäß der zweiten Zuordnung zu erzeugen, wobei eine Textur des zweiten Videonetzes mindestens ein Teil des gleichen Überwachungsvideos ist; und
das Überlagerungsmodul konfiguriert ist, um das zweite Videonetz auf der virtuellen Szene zu überlagern und anzuzeigen.

9. 3D-Überwachungssystem, umfassend ein Gehäuse, einen Prozessor, einen Speicher, eine Leiterplatte und eine Stromversorgungsschaltung, wobei die Leiterplatte in einem Raum angeordnet ist, der durch das Gehäuse umschlossen ist, und der Prozessor und der Speicher auf der Leiterplatte bereitgestellt sind; die Stromversorgungsschaltung konfiguriert ist, um verschiedene Schaltungen oder Elemente des 3D-Überwachungssystems mit Strom zu versorgen; der Speicher konfiguriert ist, um ausführbaren Programmcode zu speichern, und der Prozessor ein Programm, das dem ausführbaren Programmcode entspricht, durch Lesen des ausführbaren Programmcode ausführt, der in dem Speicher gespeichert ist, um das Schnelleinsatzverfahren für ein 3D-Überwachungssystem nach einem der Ansprüche 1 bis 4 durchzuführen.

10. Anwendungsprogramm, das, wenn es ausgeführt wird, das Schnelleinsatzverfahren für ein 3D-Überwachungssystem nach einem der Ansprüche 1 bis 4 durchführt.

11. Speicherungsmedium zum Speichern eines Anwendungsprogramms, das, wenn es ausgeführt wird, das Schnelleinsatzverfahren nach einem der Ansprüche 1 bis 4 durchführt.

## Revendications

1. Procédé de déploiement rapide pour un système de surveillance 3D, comprenant :
l'affichage d'une scène virtuelle et d'une vidéo de surveillance d'un site surveillé ;
l'obtention, à travers un dispositif d'entrée, de N points sélectionnés dans la scène virtuelle en tant que premier ensemble de points, et l'obtention, à travers un dispositif d'entrée, de N points sélectionnés dans la vidéo de surveillance en tant que deuxième ensemble de points, dans lequel N est supérieur à 2, et il existe une correspondance biunivoque entre des points dans le premier ensemble de points et des points dans le deuxième ensemble de points, respectivement, de sorte qu'une première correspondance entre la scène virtuelle et la vidéo de surveillance est formée ;
la génération d'un premier maillage vidéo en fonction de la première correspondance, dans lequel une texture du premier maillage vidéo est au moins une partie de la vidéo de surveillance ; et
la superposition et l'affichage du premier maillage vidéo sur la scène virtuelle,
dans lequel la génération d'un premier maillage vidéo en fonction de la première correspondance comprend :
la triangulation des premier et deuxième ensembles de points respectivement afin de générer des maillages triangulaires ;
**caractérisé en ce que**
la détermination du fait que la différence entre l'angle entre deux côtés quelconques du maillage triangulaire du premier ensemble de points et l'angle entre deux côtés correspondantes du maillage triangulaire correspondant du deuxième ensemble de points est inférieure à un seuil prédéfini ; et
si la différence est inférieure au seuil prédéfini, la superposition d'une vidéo de surveillance correspondant au maillage triangulaire du deuxième ensemble de points, en tant que texture, sur le maillage triangulaire correspondant du premier ensemble de points en fonction de la première correspondance, afin de générer le premier maillage vidéo,
si la différence n'est pas inférieure au seuil prédéfini, le retour à l'obtention du premier ensemble de points et du deuxième ensemble de points afin d'obtenir à nouveau le premier ensemble de points et le deuxième ensemble de points.

2. Procédé de déploiement rapide pour un système de surveillance 3D selon la revendication 1, dans lequel le premier ensemble de points est utilisé pour sélectionner une première région dans la scène virtuelle, et le deuxième ensemble de points est utilisé pour sélectionner une seconde région dans la vidéo de surveillance ;
le premier ensemble de points contient au moins quatre points caractéristiques situés au niveau de la limite de la première région sélectionnée, et le deuxième ensemble de points contient au moins quatre points caractéristiques situés au niveau de la limite de la seconde région sélectionnée.

3. Procédé de déploiement rapide pour un système de surveillance 3D selon la revendication 1, dans lequel
le premier ensemble de points est utilisé pour sélectionner une première région dans la scène virtuelle, et le deuxième ensemble de points est utilisé pour sélectionner une seconde région dans la vidéo de surveillance ;
le premier ensemble de points contient au moins un point caractéristique situé à l'intérieur de la première région sélectionnée, et le deuxième ensemble de points contient au moins un point caractéristique situé à l'intérieur de la seconde région sélectionnée.

4. Procédé de déploiement rapide pour un système de surveillance 3D selon l'une quelconque des revendications 1 à 3, dans lequel, après l'étape consistant à afficher une scène virtuelle et une vidéo de surveillance d'un site surveillé, le procédé comprend en outre :
l'obtention, à travers un dispositif d'entrée, de N points sélectionnés dans la scène virtuelle en tant que troisième ensemble de points, et l'obtention, à travers un dispositif d'entrée, de N points sélectionnés dans la même vidéo de surveillance en tant que quatrième ensemble de points, dans lequel N est supérieur à 2, et il existe une correspondance biunivoque entre des points dans le troisième ensemble de points et des points dans le quatrième ensemble de points, respectivement, de sorte qu'une seconde correspondance entre la scène virtuelle et la vidéo de surveillance est formée ;
la génération d'un second maillage vidéo en fonction de la seconde correspondance, dans lequel une texture du second maillage vidéo est au moins une partie de la même vidéo de surveillance ; et
la superposition et l'affichage du second maillage vidéo sur la scène virtuelle.

5. Système de surveillance 3D, comprenant :
un module d'affichage, configuré pour afficher une scène virtuelle et une vidéo de surveillance d'un site surveillé ;
un module d'obtention, configuré pour obtenir, à travers un dispositif d'entrée, N points sélectionnés dans la scène virtuelle en tant que premier ensemble de points, et pour obtenir, à travers un dispositif d'entrée, N points sélectionnés dans la vidéo de surveillance en tant que deuxième ensemble de points, dans lequel N est supérieur à 2, et il existe une correspondance biunivoque entre des points dans le premier ensemble de points et des points dans le deuxième ensemble de points, respectivement, de sorte qu'une première correspondance entre la scène virtuelle et la vidéo de surveillance est formée ;
un module de génération, configuré pour générer un premier maillage vidéo en fonction de la première correspondance, dans lequel une texture du premier maillage vidéo est au moins une partie de la vidéo de surveillance ; et
un module de superposition, configuré pour superposer et afficher le premier maillage vidéo sur la scène virtuelle,
dans lequel le module de génération comprend les sous-modules suivants :
un sous-module de maillage, configuré pour trianguler les premier et deuxième ensembles de points respectivement afin de générer des maillages triangulaires ; et
un sous-module de superposition, configuré pour superposer une vidéo de surveillance correspondant à un maillage triangulaire du deuxième ensemble de points, en tant que texture, sur un maillage triangulaire correspondant du premier ensemble de points en fonction de la première correspondance, afin de générer le premier maillage vidéo,
**caractérisé en ce que**
dans lequel le module de génération comprend en outre un sous-module de détermination configuré pour déterminer si la différence entre l'angle entre deux côtés quelconques du maillage triangulaire du premier ensemble de points généré par le sous-module de maillage et l'angle entre deux côtés correspondants du maillage triangulaire correspondant du deuxième ensemble de points est inférieure à un seuil prédéfini ; et
le sous-module de superposition est configuré pour, en réponse à une détermination à partir du sous-module de détermination du fait que la différence est inférieure au seuil prédéfini, superposer une vidéo de surveillance correspondant au maillage triangulaire du deuxième ensemble de points, en tant que texture, sur le maillage triangulaire correspondant du premier ensemble de points en fonction de la première correspondance, afin de générer le premier maillage vidéo,
en réponse à une détermination à partir du sous-module de détermination du fait que la différence n'est pas inférieure au seuil prédéfini, le module d'obtention obtient à nouveau le premier ensemble de points et le deuxième ensemble de points.

6. Système de surveillance 3D selon la revendication 5, dans lequel le premier ensemble de points est utilisé pour sélectionner une première région dans la scène virtuelle, et le deuxième ensemble de points est utilisé pour sélectionner une seconde région dans la vidéo de surveillance ;
le premier ensemble de points contient au moins quatre points caractéristiques situés au niveau de la limite de la première région sélectionnée, et le deuxième ensemble de points contient au moins quatre points caractéristiques situés au niveau de la limite de la seconde région sélectionnée.

7. Système de surveillance 3D selon la revendication 5, dans lequel le premier ensemble de points est utilisé pour sélectionner une première région dans la scène virtuelle, et le deuxième ensemble de points est utilisé pour sélectionner une seconde région dans la vidéo de surveillance ;
le premier ensemble de points contient au moins un point caractéristique situé à l'intérieur de la première région sélectionnée, et le deuxième ensemble de points contient au moins un point caractéristique situé à l'intérieur de la seconde région sélectionnée.

8. Système de surveillance 3D selon l'une quelconque des revendications 5 à 7, dans lequel le module d'obtention est configuré pour obtenir, à travers un dispositif d'entrée, N points sélectionnés dans la scène virtuelle en tant que troisième ensemble de points, et pour obtenir, à travers un dispositif d'entrée, N points sélectionnés dans la même vidéo de surveillance en tant que quatrième ensemble de points, dans lequel N est supérieur à 2, et il existe une correspondance biunivoque entre des points dans le troisième ensemble de points et des points dans le quatrième ensemble de points, respectivement, de sorte qu'une seconde correspondance entre la scène virtuelle et la vidéo de surveillance est formée ;
le module de génération est configuré pour générer un second maillage vidéo en fonction de la seconde correspondance, dans lequel une texture du second maillage vidéo est au moins une partie de la même vidéo de surveillance ; et
le module de superposition est configuré pour superposer et afficher le second maillage vidéo sur la scène virtuelle.

9. Système de surveillance 3D, comprenant un boîtier, un processeur, une mémoire, une carte de circuits imprimés et un circuit d'alimentation électrique, dans lequel la carte de circuits imprimés est disposée à l'intérieur d'un espace fermé par le boîtier, le processeur et la mémoire étant prévus sur la carte de circuits imprimés ; le circuit d'alimentation électrique est configuré pour alimenter divers circuits ou éléments du système de surveillance 3D ; la mémoire est configurée pour stocker un code de programme exécutable, et le processeur exécute un programme correspondant au code de programme exécutable en lisant le code de programme exécutable stocké dans la mémoire afin d'effectuer le procédé de déploiement rapide pour un système de surveillance 3D selon l'une quelconque des revendications 1 à 4.

10. Programme d'application, qui, lorsqu'il est exécuté, effectue le procédé de déploiement rapide pour un système de surveillance 3D selon l'une quelconque des revendications 1 à 4.

11. Support de stockage destiné à stocker un programme d'application qui, lorsqu'il est exécuté, effectue le procédé de déploiement rapide selon l'une quelconque des revendications 1 à 4.
